# EUROPEAN PATENT APPLICATION

(11) **EP 4 807 821 A1**
(43) Date of publication of application: **16.09.2026**
(21) Application number: 25162556.2
(22) Date of filing: 10.03.2025
(51) Int. Cl.: H01M 8/0232, H01M 8/0258, H01M 8/04014, H01M 8/04029, H01M 8/1226, H01M 8/0252, H01M 8/243, H01M 8/12

(54) **FLAT TUBULAR SOLID OXIDE FUEL CELL UNIT AND SOLID OXIDE FUEL CELL STACK MODULE FOR AN AIRCRAFT**

(71) Applicant: AIRBUS Operations GmbH, 21129 Hamburg (DE)
(72) Inventor: Ahilan, Vignesh, 21129 Hamburg (DE)
(74) Representative: Airbus Germany

(57) **Abstract**

The present invention provides a flat tubular solid oxide fuel cell unit (10), comprising: a porous metal support structure (11) having at least one fuel channel (12) that extends through the porous metal support structure (11) in a longitudinal direction (X) of the porous metal support structure (11); an anode layer (13) that covers the porous metal support structure (11); an electrolyte layer (15) applied on a shell surface of the porous metal support structure (11) covered by the anode layer (13); and a cathode layer (17) applied on the electrolyte layer (15). Further the present invention provides a solid oxide fuel cell stack module (1) for an aircraft comprising such a flat tubular solid oxide fuel cell unit (10).

## Description

The invention relates to a flat tubular solid oxide fuel cell unit. The invention is furthermore concerned with a solid oxide fuel cell stack module for an aircraft containing such a flat tubular solid oxide fuel cell unit.

The propulsion power for helicopter and urban air mobility (UAM) is mainly powered by jet propulsion/combustion engines using hydrocarbon based fuel. The hydrocarbon fuel is responsible for carbon footprints, NOx emission, greenhouse gas emission and high frequency noise in the environment. On the other hand, Zero emission UAM and helicopter concepts are under development with the support of lithium-ion battery technology. However, the energy and power density of lithium-ion batteries is far lower than traditional fuels. Additionally, the thermal runaway in lithium ion batteries is a threatening factor in terms of safety.

The hydrogen produced by renewable energy is a fuel for next generation propulsion aviation, which is a zero-carbon fuel burned with oxygen from the atmosphere. However, the direct usage of hydrogen in the jet propulsion engine results in emission of NOx to the environment, due to direct combustion reaction. Additionally, this process results in low efficiency of the engine. Solid oxide fuel cell (SOFC) is an energy conversion device, which uses hydrogen as fuel and converts its chemical energy into electrical energy and heat. The benefit of SOFC is high electrical and thermal energy efficiency and it produces energy by non-combustion reaction, which is the most safe operation. The SOFC is already used for stationary applications and it is able to produce power with high fuel utilization up to 85 %.

The SOFC typically comprises an anode, a cathode, an electrolyte and current collecting components (interconnector). The oxygen reduction reaction occurs in the porous cathode by accepting electrons and producing oxide ions, which transfer through the gas tight electrolyte to the anode interface. The hydrogen fuel gets oxidized at the anode interface by accepting oxide ions and producing electrons, which pass to the cathode side through an external circuit. The operating temperature of SOFC is between 600 - 850 °C, which depends on the choice of SOFC materials. However, in known applications the stack is built mainly with planar SOFC stacks. Thus, widely used SOFC for stationary applications is a planar type SOFC, which has low gravimetric power density and high thermal stress to the cell at fast heating and cooling rate. This is mainly due to the heavy bipolar plate used in the design.

The stacking concept of tubular SOFC is explored by many research groups. For example, document US 2013/266884 A1 describes a unit cell for a flat tubular solid oxide fuel cell using a ceramic extruder to form an anode so as to provide first gas passages therein, and both ends thereof were sealed. However it has a disadvantage of a wide temperature profile inside the stack and difficulties in extracting the heat from the stack. This results in degradation of cell materials and results in a poor performance.

According to the invention, this problem is solved in each case by the subject matters of the independent claims.

According to a first aspect of the invention, a flat tubular solid oxide fuel cell unit is provided. The flat tubular solid oxide fuel cell unit comprises a porous metal support structure having at least one fuel channel. The at least one fuel channel extends through the porous metal support structure in a longitudinal direction of the porous metal support structure. The flat tubular solid oxide fuel cell unit further comprises an anode layer that covers the porous metal support structure and an electrolyte layer applied on a shell surface of the porous metal support structure covered by the anode layer. Moreover, the flat tubular solid oxide fuel cell unit comprises a cathode layer applied on the electrolyte layer.

According to a second aspect of the invention, a solid oxide fuel cell stack module for an aircraft is provided. The solid oxide fuel cell stack module comprises a plurality of flat tubular solid oxide fuel cell units according to the first aspect of the invention. Furthermore, the solid oxide fuel cell stack module comprises a fuel distribution device with a current collector, wherein the fuel distribution device comprises a top part and a bottom part. The plurality of flat tubular solid oxide fuel cell units is arranged in between the top part and the bottom part such that a fuel is flowable from the top part through the at least one fuel channel to the bottom part. Thereby, the fuel distribution device is configured conductively.

A fundamental concept of the invention is to provide a flat tubular metal supported solid oxide fuel cell (SOFC) and stack design preferably for aircraft applications, most preferably Urban Air Mobility (UAM) and helicopter applications. The present invention provides a design solution for fuel and air supply to the flat tubular SOFC stack module respectively arrangement. In particular, a high temperature fuel cell stack for UAV, UAM and helicopters is provided. The at least one fuel channel comprises a tubular shape, which includes a circular cross-section, an oval cross-section, a polygonal cross-section or a similar cross-section. The at least one fuel channel can comprise a plurality of fuel channels that extend through the porous metal support structure in parallel along the longitudinal direction. Moreover, the anode layer covers the porous metal support structure can also include that the anode layer covers an inner surface of the at least one fuel channel. According to the present invention the porous metal support structure also includes a perforated metal sheet.

In other words, the plurality of flat tubular solid oxide fuel cell units, the top part and the bottom part together build a sandwich structure, wherein the plurality of flat tubular solid oxide fuel cell units is the core of the sandwich structure.

The flat tubular solid oxide fuel cell (SOFC) unit can provide a huge advantage on high gravimetric power density, high surface to volume ratio and low thermal stress. Moreover an integration of the flat tubular SOFC unit to a stack can be quite flexible depending on the application.

Another particular advantage in the solution according to an aspect of the invention is that the design concept of the present invention can provide a compact size and a low weight, in particular for the zero emission helicopter and/or urban air mobility application. The fuel distribution device may comprise a compact fuel inlet channel and a compact fuel outlet channel, which both can provide a good distribution of fuel, preferably hydrogen, to the
plurality of flat tubular solid oxide fuel cell units.

Another advantage of the present invention is, that a narrow temperature profile can be provided inside the SOFC stack module and extracting the heat from the SOFC stack module can be improved. This can reduce a degradation of cell materials in the SOFC and improve a performance.

Advantageous embodiments and further developments emerge from the description with reference to the figures.

According to some embodiments of the invention, the porous metal support structure has a porosity in the range from about 75 % to about 95 %. Preferably, the porous metal support structure has a porosity in the range from about 85 % to about 92 %, in particular of about 90 %.

According to some further embodiments of the invention, the porous metal support structure comprises a ferrochrome alloy or a nickel foam material or a nickel alloy foam material. For example, the porous metal support structure can have a thickness in the range from about 300 µm to about 5300 µm, preferably in the range from about 500 µm to about 1500 µm, and/or in particular of about 5000 µm.

Optionally, the at least one fuel channel can have a diameter in the range from about 2.8 mm to about 3.2 mm, in particular about 3.0 mm.

According to some further embodiments of the invention, the cathode layer is covered by a current collection layer that comprises a silver material and/or a silver mesh. For example, the current collection layer can have a porosity in the range from about 35 % to about 85 %, preferably of about 40 % or about 80 %. The current collection layer can have a thickness in the range from about 5 µm to about 110 µm. In particular, the current collection layer comprising a silver material can have a thickness in the range from about 5 µm to about 10 µm. Also, the current collection layer comprising a silver mesh can have a thickness in the range from about 30 µm to about 110 µm, in particular of about 100 µm.

According to some further embodiments of the invention, the porous metal support structure is physically subdivided into a plurality of sections, wherein the porous metal support structure further comprises an insulating spacer zone that is arranged between the plurality of physically subdivided sections of the porous metal support structure and that is configured to electrically insulate adjacent sections of the physically subdivided sections, and wherein an interconnector device electrically couples the adjacent sections. Such a configuration can be called a networking design. The networking design can reduce the ohmic resistance of the and can result in an increased performance. This embodiment can also be used for stacking, in particular in the solid oxide fuel cell stack module.

The porous metal support structure including the plurality of physically subdivided sections and the insulating spacer zone can be manufactured by a multimaterial generative manufacturing process, also called 3D-printing. The insulating spacer zone can be made of a ceramic material.

According to some further embodiments of the invention, the solid oxide fuel cell stack module has a metal content of about 90 mass-% or more. Hence, the relatively high metal content can improve mechanical stability of the solid oxide fuel cell stack module during vibrations and/or pressurized conditions. For example, the solid oxide fuel cell stack module can have a metal content of about 93 mass-% or more, in particular of about 95 mass-% or more.

The current collector can be made of a ferrochrome alloy.

According to some further embodiments of the invention, the fuel distribution device, in particular the top part and the bottom part, has an exterior surface, which is exposed to an air atmosphere, wherein the exterior surface at least sectionwise comprises a protective oxide coating. Hence, the protective oxide coating can provide a good corrosion resistance in the oxidation and reduction environment. For example, the protective oxide coating can comprise an aluminum oxide (Al2O3) material. The fuel distribution device, in particular the top part and the bottom part, can be made of the same material as the metal support structure, in particular of a ferrochrome alloy or a nickel foam material. The exterior surface cannot be in contact with the metal support structure, for example.

According to some further embodiments of the invention, the top part and the bottom part are joined to the plurality of flat tubular solid oxide fuel cell units with a material bond, in particular by a brazing welding process.

According to some further embodiments of the invention, the SOFC stack module further comprises a cooling device that is arranged in between the top part and the bottom part of the fuel distribution device parallel to the plurality of flat tubular solid oxide fuel cell units. Advantageously, the present design concept can have the flexibility on integrating the cooling device into the SOFC stack module and/or on the choice of a voltage level. The cooling device can have a predetermined distance to the plurality of flat tubular solid oxide fuel cell units for not providing an electrical connection between them.

According to some further embodiments of the invention, the cooling device comprises plates, which are arranged between adjacent flat tubular solid oxide fuel cell units of the plurality of flat tubular solid oxide fuel cell units such that the plates and the plurality of flat tubular solid oxide fuel cell units are arranged in an alternating order. Thus, the plates are uniformly distributed throughout the solid oxide fuel cell stack module, which can help to maintain a uniform temperature in the SOFC stack module. In particular, the plates can be configured as fin plates.

According to some further embodiments of the invention, a coolant streaming through the cooling device is configured as a liquid metal. For example, the liquid metal comprises sodium or potassium. With the liquid metal the cooling device can be configured as a closed loop cooling device.

According to some further embodiments of the invention, a coolant streaming through the cooling device is configured as an airflow. An air inlet of the cooling device can be provided from top of the SOFC stack module either directly or by means of a porous air breathing hood or a single channel hood, for example.

According to some further embodiments of the invention, the plates have perforations for releasing the airflow towards the plurality of flat tubular solid oxide fuel cell units. Hence, a weight of the solid oxide fuel cell stack module can be further reduced by the perforations. Furthermore, the air can be in direct contact with the cooling device respectively heat exchanger loop and also with the cathode layer of the SOFC, which helps to maintain the air temperature uniform and a smooth SOFC operation, respectively.

Optionally, the perforations can have a size that increases along the longitudinal direction of the porous metal support structure. Thus, a uniform distribution of air throughout the surface of each flat tubular solid oxide fuel cell unit from top to bottom can be provided.

According to some further embodiments of the invention, the SOFC stack module further comprises a casing that surrounds the plurality of flat tubular solid oxide fuel cell units perpendicular to the longitudinal direction of the porous metal support structure. Additionally, the casing can comprise a perforated section for housing the fuel distribution device, preferably at least the top part and the bottom part.

Optionally, the casing can comprise a metal foam or a silicon carbide foam. Thus, the casing can provide a heat shielding effect and a heat resistance. In particular, the casing can be made of a sandwiched porous metal foam structure or a sandwiched porous silicon carbide structure. Hence, a weight of the solid oxide fuel cell stack module can be highly reduced.

In some embodiments, the SOFC stack module or the system, respectively, comprises the arrangement of flat tubular metal supported SOFCs, an electrical connection pattern, the external boxing respectively casing, the coolant fin plates, and the fuel and air supply design for the stack.

The present invention is explained more specifically below on the basis of the exemplary embodiments indicated in the schematic figures, in which:
- Fig. 1: shows a schematic perspective view of a solid oxide fuel cell stack module for an aircraft according to an embodiment of the invention;
- Fig. 2A, 2B: show a schematic illustration of a flat tubular solid oxide fuel cell unit according to a further embodiment of the invention;
- Fig. 3: shows a schematic perspective view of a flat tubular solid oxide fuel cell unit comprising a plurality of physically subdivided sections of the porous metal support structure according to a further embodiment of the invention;
- Fig. 4: shows a schematic perspective view of a fuel distribution device according to a further embodiment of the invention;
- Fig. 5: shows a schematic perspective view of a fuel inlet channel of the fuel distribution device of Fig. 4;
- Fig. 6: shows a schematic perspective view of a solid oxide fuel cell stack module for an aircraft according to a further embodiment of the invention comprising a cooling device;
- Fig. 7: shows a schematic perspective view of a cooling device of the solid oxide fuel cell stack module of Fig. 6;
- Fig. 8: shows a schematic perspective view of an arrangement of the flat tubular solid oxide fuel cell units and the cooling device;
- Fig. 9: shows an extract of the arrangement of the flat tubular solid oxide fuel cell units and the cooling device;
- Fig. 10: shows a schematic side view of a cooling device comprising perforations according to a further embodiment of the invention;
- Fig. 11: shows a schematic perspective view of a solid oxide fuel cell stack module for an aircraft according to a further embodiment of the invention comprising a cooling device and a casing;
- Fig. 12: shows a schematic perspective view of a casing of the solid oxide fuel cell stack module of Fig. 11; and
- Fig. 13: shows a schematic cut view of an excerpt of a casing of the solid oxide fuel cell stack module of Fig. 11.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

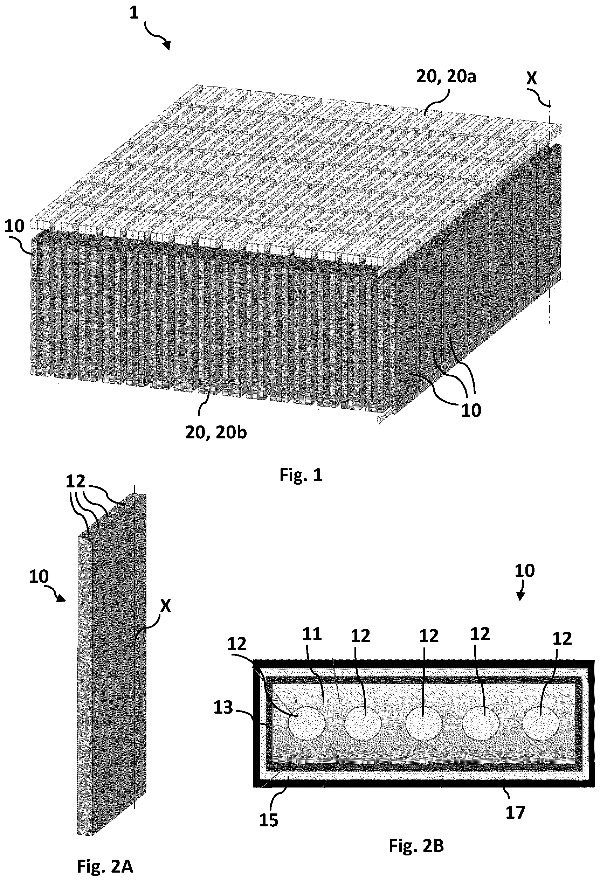

Fig. 1 shows a schematic perspective view of a solid oxide fuel cell stack module 1 for an aircraft according to an embodiment of the invention.

The solid oxide fuel cell stack module 1 exemplarily comprises a plurality of flat tubular solid oxide fuel cell units 10. Each flat tubular solid oxide fuel cell unit 10 comprises a porous metal support structure 11 with at least one fuel channel 12 that extends through the porous metal support structure 11 in a longitudinal direction X of the porous metal support structure 11. Furthermore, each flat tubular solid oxide fuel cell unit 10 comprises an anode layer 13 that covers the porous metal support structure 11, an electrolyte layer 15 applied on a shell surface of the porous metal support structure 11 covered by the anode layer 13, and a cathode layer 17 applied on the electrolyte layer 15 as it is shown in Figures 2A and 2B.

Further, the solid oxide fuel cell stack module 1 comprises a fuel distribution device 20 with a current collector. The fuel distribution device 20 comprises a top part 20a and a bottom part 20b. The plurality of flat tubular solid oxide fuel cell units 10 is arranged in between the top part 20a and the bottom part 20b such that a fuel is flowable from the top part 20a through the at least one fuel channel 12 to the bottom part 20b. The top part 20a and the bottom part 20b can be joined to the plurality of flat tubular solid oxide fuel cell units 10 with a material bond, in particular by a brazing welding process. The fuel distribution device 20 is configured conductively.

In other words, the plurality of flat tubular solid oxide fuel cell units 10, the top part 20a and the bottom part 20b together build a sandwich structure, wherein the plurality of flat tubular solid oxide fuel cell units 10 is the core of the sandwich structure.

For example, the solid oxide fuel cell stack module 1 can have a metal content of about 90 mass-% or more. Hence, the relatively high metal content can improve mechanical stability of the solid oxide fuel cell stack module 1 during vibrations and/or pressurized conditions. Preferably, the solid oxide fuel cell stack module can have a metal content of about 93 mass-% or more, in particular of about 95 mass-% or more. The current collector can be made of a ferrochrome alloy.

Fig. 2A, 2B show a schematic illustration of a flat tubular solid oxide fuel cell unit 10 according to a further embodiment of the invention. Specifically, Fig. 2B depicts a cut view of the flat tubular solid oxide fuel cell unit 10.

The flat tubular solid oxide fuel cell unit 10 exemplarily comprises a porous metal support structure 11, an anode layer 13 that covers the porous metal support structure 11, an electrolyte layer 15 applied on a shell surface of the porous metal support structure 11 covered by the anode layer 13, and a cathode layer 17 applied on the electrolyte layer 15.

The porous metal support structure 11 has at least one fuel channel 12 that extends through the porous metal support structure 11 in a longitudinal direction X of the metal support structure 11.

Each fuel channel 12 comprises a tubular shape, which includes a circular cross-section, an oval cross-section, a polygonal cross-section or a similar cross-section. The at least one fuel channel 12 can comprise a plurality of fuel channels 12 that extend through the porous metal support structure 11 in parallel along the longitudinal direction X. Here, the at least one fuel channel 12 has five fuel channels 12 which extend parallel along the longitudinal direction X.

Moreover, the anode layer 13 covers the porous metal support structure 11 can also include that the anode layer 13 covers an inner surface of the at least one fuel channel 12. The flat tubular solid oxide fuel cell (SOFC) unit 10 can provide a huge advantage on high gravimetric power density, high surface to volume ratio and low thermal stress. The anode layer 13 can comprise a nickel - 8 mol% yttrium stabilized zirconia (Ni-8YSZ) material or a nickel gadolinium doped cerium oxide (Ni-GDC) material. The electrolyte layer 15 can comprise a 8 mol% yttrium stabilized zirconia (8YSZ) material or a scandium stabilized zirconia oxide (ScSZ) material. The electrolyte layer 15 can further include a barrier layer, for example made of a gadolinium doped cerium oxide (GDC) material.

For example, the porous metal support structure 11 can have a porosity in the range from about 75 % to about 98 %, preferably in the range from about 85 % to about 95 %, in particular of about 90 %. The porous metal support structure 11 can comprise a ferrochrome alloy or a nickel foam material. For example, the porous metal support structure 11 can have a thickness in the range from about 4700 µm to about 5300 µm, in particular of about 5000 µm. Optionally, the at least one fuel channel 12 can have a diameter in the range from about 2.8 mm to about 3.2 mm, in particular about 3.0 mm.

Furthermore, the cathode layer 17 can be covered by a current collection layer that comprises a silver material and/or a silver mesh. For example, the current collection layer can have a porosity in the range from about 35 % to about 85 %, preferably of about 40 % or about 80 %. The current collection layer can have a thickness in the range from about 5 µm to about 110 µm. In particular, the current collection layer comprising a silver material can have a thickness in the range from about 5 µm to about 10 µm. Also, the current collection layer comprising a silver mesh can have a thickness in the range from about 30 µm to about 110 µm, in particular of about 100 µm.

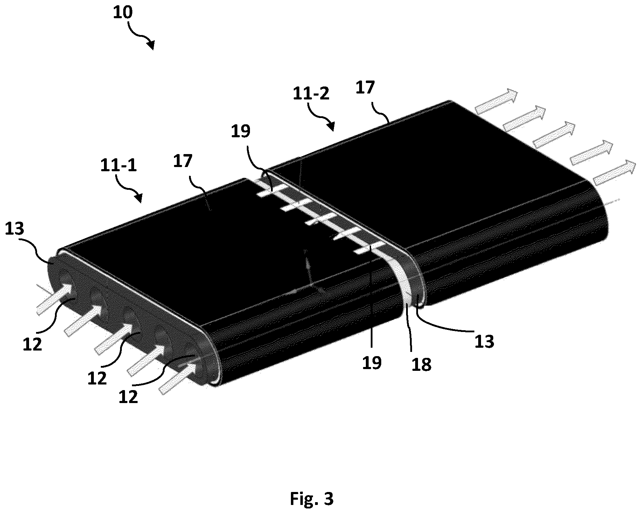

Fig. 3 shows a schematic perspective view of a flat tubular solid oxide fuel cell unit 10 comprising a plurality of physically subdivided sections 11-1, 11-2 of the porous metal support structure 11 according to a further embodiment of the invention.

The flat tubular solid oxide fuel cell unit 10 substantially comprises the same features as described in Figures 2A and 2B. Furthermore, the porous metal support structure 11 can be physically subdivided into the plurality of sections 11-1, 11-2. The flat tubular solid oxide fuel cell unit 10 may further comprise an insulating spacer zone 18 that is arranged between the plurality of physically subdivided sections 11-1, 11-2 of the porous metal support structure 11 and that is configured to electrically insulate adjacent sections 11-1, 11-2 of the physically subdivided sections. Exemplarily, the insulating spacer zone 18 can have the same cross-section with regard to the longitudinal direction X as the metal support structure covered by the anode layer 13. The insulating spacer zone 18 also comprises recesses corresponding to the at least one fuel channel 12 such that the fuel can flow through all sections 11-1, 11-2.

Additionally, an interconnector device 19 electrically couples the adjacent sections. Such a configuration can be called a networking design. The networking design can reduce the ohmic resistance of the and can result in an increased performance.

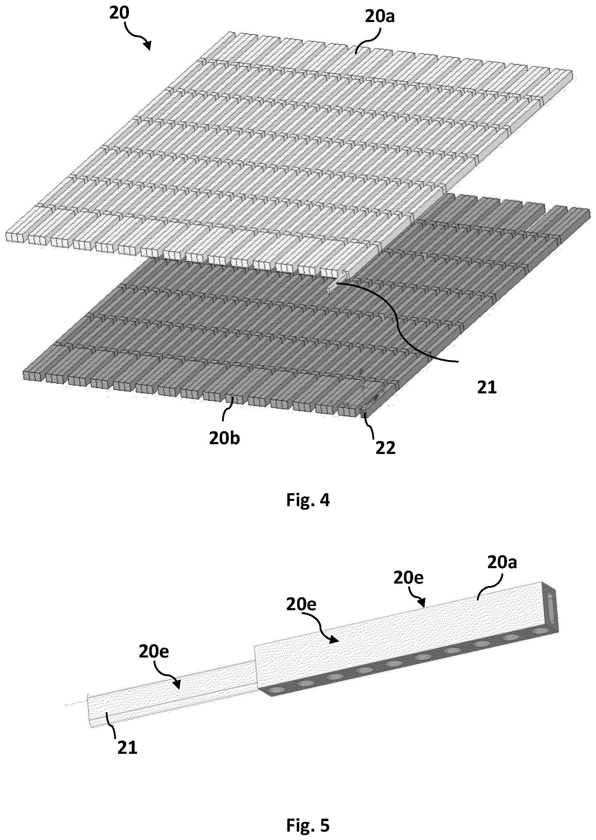

Fig. 4 shows a schematic perspective view of a fuel distribution device 20 according to a further embodiment of the invention. Fig. 5 shows a schematic perspective view of a fuel inlet channel 21 of the fuel distribution device 20 of Fig. 4.

The fuel distribution device 20 comprises a current collector. The fuel distribution device 20 comprises a top part 20a and a bottom part 20b. The fuel distribution device 20, in particular the top part 20a and the bottom part 20b, has an exterior surface 20e, which is exposed to an air atmosphere, wherein the exterior surface 20e at least sectionwise comprises a protective oxide coating. Hence, the protective oxide coating can provide a good corrosion resistance in the oxidation and reduction environment. For example, the protective oxide coating can comprise an aluminum oxide Al2O3 material.

The fuel distribution device 20, in particular the top part 20a and the bottom part 20b, can be made of the same material as the porous metal support structure 11, in particular of a ferrochrome alloy or a nickel foam material. The exterior surface 20e cannot be in contact with the metal support structure 11, for example.

The fuel distribution device may comprise the compact fuel inlet channel 21 and a compact fuel outlet channel 22, which both can provide a good distribution of fuel, preferably hydrogen, to the plurality of flat tubular solid oxide fuel cell units.

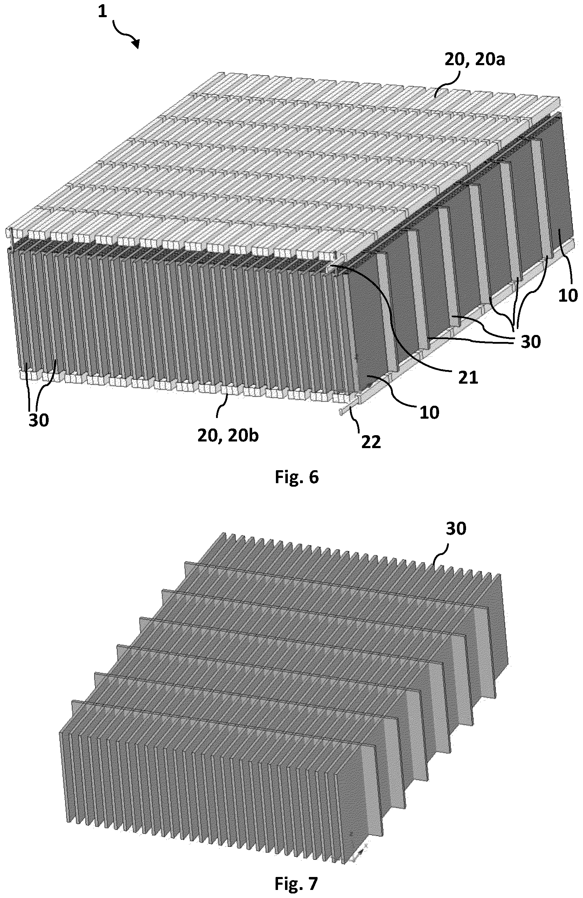

Fig. 6 shows a schematic perspective view of a solid oxide fuel cell stack module 1 for an aircraft according to a further embodiment of the invention comprising a cooling device 30. Fig. 7 shows a schematic perspective view of a cooling device 30 of the solid oxide fuel cell stack module 1 of Fig. 6.

The solid oxide fuel cell stack module 1 substantially comprises the same features as described in Figure 1. Further, the solid oxide fuel cell stack module 1 here exemplarily comprises the cooling device 30 that is arranged in between the top part 20a and the bottom part 20b of the fuel distribution device 20 parallel to the plurality of flat tubular solid oxide fuel cell units 10. Advantageously, the present design concept can have the flexibility on integrating the cooling device 30 into the SOFC stack module 1 and/or on the choice of a voltage level.

For example, the cooling device 30 comprises plates, which are arranged between adjacent flat tubular solid oxide fuel cell units 10 of the plurality of flat tubular solid oxide fuel cell units 10 such that the plates 30 and the plurality of flat tubular solid oxide fuel cell units 10 are arranged in an alternating order. Thus, the plates 30 are uniformly distributed throughout the solid oxide fuel cell stack module 1, which can help to maintain a uniform temperature in the SOFC stack module. In particular, the plates 30 can be configured as fin plates.

A coolant streaming through the cooling device 30 may be configured as a liquid metal. For example, the liquid metal comprises sodium or potassium. With the liquid metal the cooling device 30 can be configured as a closed loop cooling device. Alternatively, a coolant streaming through the cooling device 30 may be configured as an airflow. An air inlet of the cooling device 30 can be provided from top of the SOFC stack module 1 either directly or by means of a porous air breathing hood or a single channel hood, for example.

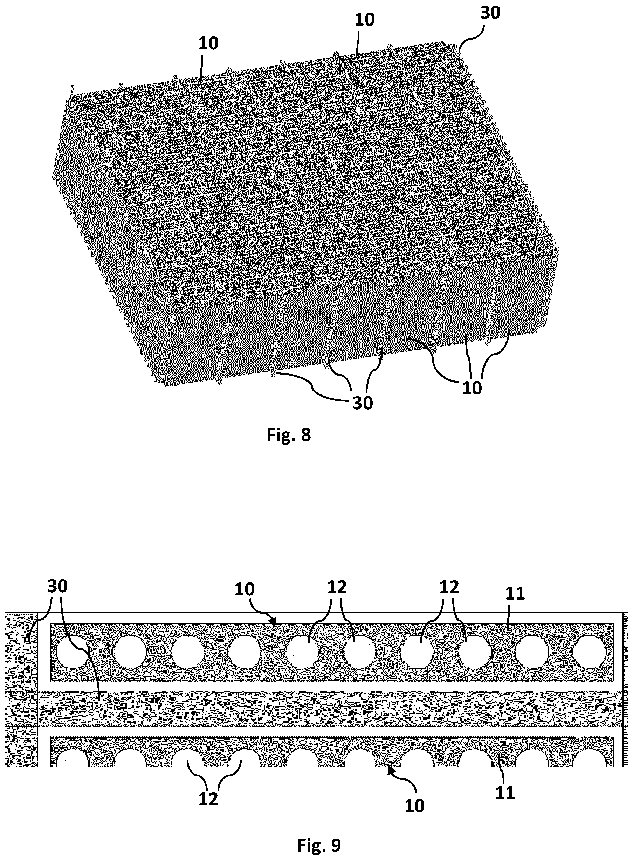

Fig. 8 shows a schematic perspective view of an arrangement of the flat tubular solid oxide fuel cell units 10 and the cooling device 30.

Here, it is illustrated that the plates, in particular fin plates, can be arranged between adjacent flat tubular solid oxide fuel cell units 10 of the plurality of flat tubular solid oxide fuel cell units 10 such that the plates 30 and the plurality of flat tubular solid oxide fuel cell units 10 are arranged in an alternating order. The alternating order applies to both dimensions in which the flat tubular solid oxide fuel cell units 10 are arranged, that means the alternating order is applied in each direction perpendicular to the longitudinal direction X. Thus, the plates 30 are uniformly distributed throughout the solid oxide fuel cell stack module 1.

Fig. 9 shows an extract of the arrangement of the flat tubular solid oxide fuel cell units 10 and the cooling device 30.

The cooling device 30 can have a predetermined distance to the plurality of flat tubular solid oxide fuel cell units 10 for not providing an electrical connection between them, as it is shown in Fig. 9.

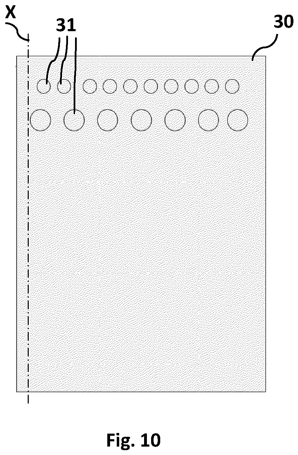

Fig. 10 shows a schematic side view of a cooling device 30 comprising perforations 31 according to a further embodiment of the invention.

Optionally, the plates 30 have the perforations 31 for releasing the airflow towards the plurality of flat tubular solid oxide fuel cell units 10. Hence, a weight of the solid oxide fuel cell stack module can be further reduced by the perforations. Furthermore, the air can be in direct contact with the cooling device 30 respectively heat exchanger loop and also with the cathode layer 17 of the SOFC 10, which helps to maintain the air temperature uniform and a smooth SOFC operation, respectively.

Optionally, the perforations 31 can have a size that increases along the longitudinal direction X of the porous metal support structure 11. Thus, a uniform distribution of air throughout the surface of each flat tubular solid oxide fuel cell unit 10 from top to bottom can be provided.

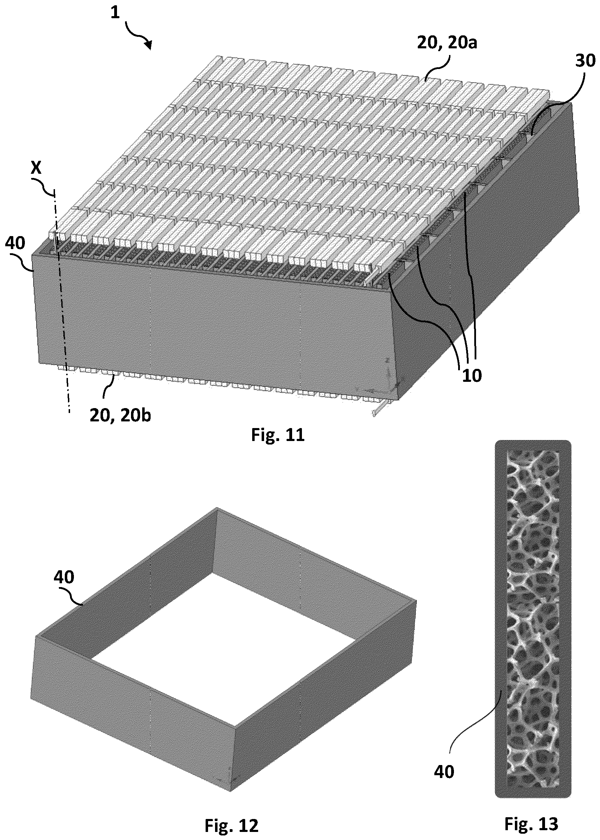

Fig. 11 shows a schematic perspective view of a solid oxide fuel cell stack module 1 for an aircraft according to a further embodiment of the invention comprising a cooling device 30 and a casing 40. Fig. 12 shows a schematic perspective view of a casing 40 of the solid oxide fuel cell stack module 1 of Fig. 11.

The solid oxide fuel cell stack module 1 substantially comprises the same features as described in Figure 6. Further, the solid oxide fuel cell stack module 1 can comprise the casing 40 that surrounds the plurality of flat tubular solid oxide fuel cell units 10 perpendicular to the longitudinal direction X of the metal support structure 11. Additionally, the casing 40 can comprise a perforated section for housing the fuel distribution device 20, preferably at least the top part 20a and the bottom part 20b.

Optionally, the casing 40 can comprise a metal foam or a silicon carbide foam. Thus, the casing 40 can provide a heat shielding effect and a heat resistance. In particular, the casing 40 can be made of a sandwiched porous metal foam structure or a sandwiched porous silicon carbide structure. Hence, a weight of the solid oxide fuel cell stack module 1 can be highly reduced.

Fig. 13 shows a schematic cut view of an excerpt of a casing of the solid oxide fuel cell stack module of Fig. 11. Specifically, the sandwich structure of the casing 40 is shown. The sandwich structure may comprise two face sheets, one on the left side and one on the right side as illustrated in Fig. 13. A core of the sandwich structure is arranged between the two face sheets. Also, the pores of the porous metal foam core or of the porous silicon carbide core is illustrated in Fig. 13.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### Reference list

- 1: solid oxide fuel cell stack module
- 10: flat tubular solid oxide fuel cell unit
- 11: metal support structure
- 11-1, 11-2: adjacent sections of the physically subdivided metal support structure
- 12: fuel channel
- 13: anode layer
- 15: electrolyte layer
- 17: cathode layer
- 18: insulating spacer zone
- 19: interconnector device
- 20: fuel distribution device
- 20a: top part of the fuel distribution device
- 20b: bottom part of the fuel distribution device
- 20e: exterior surface
- 21: fuel inlet channel
- 22: fuel outlet channel
- 30: cooling device
- 31: perforations
- 40: casing

- X: longitudinal direction

## Claims

1. Flat tubular solid oxide fuel cell unit (10), comprising:
a porous metal support structure (11) having at least one fuel channel (12) that extends through the porous metal support structure (11) in a longitudinal direction (X) of the porous metal support structure (11);
an anode layer (13) that covers the porous metal support structure (11);
an electrolyte layer (15) applied on a shell surface of the porous metal support structure (11) covered by the anode layer (13); and
a cathode layer (17) applied on the electrolyte layer (15).

2. Flat tubular solid oxide fuel cell unit (10) according to claim 1, wherein the porous metal support structure (11) has a porosity in the range from about 75 % to about 98 %, preferably in the range from about 85 % to about 95 %, in particular of about 90 %.

3. Flat tubular solid oxide fuel cell unit (10) according to claim 1 or 2, wherein the porous metal support structure (11) comprises a ferrochrome alloy or a nickel or nickel alloy foam material.

4. Flat tubular solid oxide fuel cell unit (10) according to one of the preceding claims, wherein the cathode layer (17) is covered by a current collection layer that comprises a silver material and/or a silver mesh.

5. Flat tubular solid oxide fuel cell unit (10) according to one of the preceding claims, wherein the porous metal support structure (11) is physically subdivided into a plurality of sections (11-1, 11-2), wherein the flat tubular solid oxide fuel cell unit (10) further comprises an insulating spacer zone (18) that is arranged between the plurality of physically subdivided sections (11-1, 11-2) of the porous metal support structure (11) and that is configured to electrically insulate adjacent sections (11-1, 11-2) of the physically subdivided sections, and wherein an interconnector device (19) electrically couples the adjacent sections.

6. Solid oxide fuel cell stack module (1), comprising:
a plurality of flat tubular solid oxide fuel cell units (10) according to one of the preceding claims;
a fuel distribution device (20) with a current collector, wherein the fuel distribution device (20) comprises a top part (20a) and a bottom part (20b),
wherein the plurality of flat tubular solid oxide fuel cell units (10) is arranged in between the top part (20a) and the bottom part (20b) such that a fuel is flowable from the top part (20a) through the at least one fuel channel (12) to the bottom part (20b);
wherein the fuel distribution device (20) is configured conductively.

7. Solid oxide fuel cell stack module (1) according to claim 6, wherein the solid oxide fuel cell stack module (1) has a metal content of about 90 mass-% or more.

8. Solid oxide fuel cell stack module (1) according to claim 6 or 7, wherein the fuel distribution device (20), in particular the top part (20a) and the bottom part (20b), has an exterior surface (20e), which is exposed to an air atmosphere, wherein the exterior surface (20e) at least sectionwise comprises a protective oxide coating.

9. Solid oxide fuel cell stack module (1) according to one of the claims 6 to 8, wherein the top part (20a) and the bottom part (20b) are joined to the plurality of flat tubular solid oxide fuel cell units (10) with a material bond, in particular by a brazing welding process.

10. Solid oxide fuel cell stack module (1) according to one of the claims 6 to 9, further comprising a cooling device (30) that is arranged in between the top part (20a) and the bottom part (20b) of the fuel distribution device (20) parallel to the plurality of flat tubular solid oxide fuel cell units (10).

11. Solid oxide fuel cell stack module (1) according to claim 10, wherein the cooling device (30) comprises plates, which are arranged between adjacent flat tubular solid oxide fuel cell units (10) of the plurality of flat tubular solid oxide fuel cell units (10) such that the plates (30) and the plurality of flat tubular solid oxide fuel cell units (10) are arranged in an alternating order.

12. Solid oxide fuel cell stack module (1) according to claim 10 or 11, wherein a coolant streaming through the cooling device (30) is configured as a liquid metal.

13. Solid oxide fuel cell stack module (1) according to claim 10 or 11, wherein a coolant streaming through the cooling device (30) is configured as an airflow.

14. Solid oxide fuel cell stack module (1) according to claim 11 and 13, wherein the plates (30) have perforations (31) for releasing the airflow towards the plurality of flat tubular solid oxide fuel cell units (10).

15. Solid oxide fuel cell stack module (1) according to one of the claims 6 to 14, further comprising a casing (40) that surrounds the plurality of flat tubular solid oxide fuel cell units (10) perpendicular to the longitudinal direction (X) of the porous metal support structure (11).
